# EUROPEAN PATENT SPECIFICATION

(11) **EP 3 028 207 B1**
(45) Date of publication and mention of the grant of the patent: **25.07.2018**
(21) Application number: 13890655.7
(22) Date of filing: 02.08.2013
(51) Int. Cl.: G06F 21/33, G06F 21/44, G06F 21/64, H04L 29/06, H04W 12/06, H04L 29/08

(54) **COMMUNICATION USING OVER-THE -TOP IDENTITIES WITHOUT CENTRALIZED AUTHORITY**
KOMMUNIKATION MITTELS OVER-THE-TOP-IDENTITÄTEN OHNE ZENTRALISIERTE BERECHTIGUNG
COMMUNICATION AU MOYEN D'IDENTITÉS PAR CONTOURNEMENT SANS AUTORITÉ CENTRALISÉE

(43) Date of publication of application: 08.06.2016
(73) Proprietor: Nokia Solutions and Networks Oy, 02610 Espoo (FI)
(72) Inventor: NARAYANAN, Ram, Lakshmi, Sunnyvale, CA 94089 (US)
(74) Representative: Borgström, Markus
(86) International application number: PCT/US2013/053404
(87) International publication number: WO 2015/016940

(56) References cited:
- WO-A1-2012/092928
- US-A1- 2004 003 190
- US-A1- 2009 215 411
- US-A1- 2009 320 102
- US-A1- 2012 144 195
- US-A1- 2012 252 398
- US-A1- 2013 145 165
- US-A1- 2013 174 271

## Description

### BACKGROUND:

### Field:

Various communication systems may benefit from ways of communicating in the absence of a centralized authority. For example, certain wireless communication systems may benefit from victim to victim communication using over-the-top (OTT) identities in a disaster device-to-device (D2D) scenario.

### Description of the Related Art:

Cellular network and Wi-Fi network coverage is pervasive, particularly in urban areas. Depending upon available capacity at a given location over a time, the network can deliver requested service to users. In addition, in connection with the third generation partnership project (3GPP), for example, device-to-device (D2D) and Proximity Service (ProSe) are being created.

A goal of D2D is to enable direct communication between the devices. This direct communication can increase capacity of wireless base station. D2D, therefore, allows combining infrastructure-mode and *ad hoc* communication. Much study of ProSe and D2D is related to network assisted services. There are, however, scenarios in which coordinated D2D *ad hoc* communication may be needed. One such situation is a disaster scenario. For example, when a disaster happens a network can get disturbed and existing schemes do not allow victims, namely users who are trapped inside the disaster region, to communicate to another victim in coordinated fashion. Such coordinated communication between victims can be referred to as victim-to-victim (V2V) communication.

Disasters are exceptional events that can be either man made, such as terrorist attacks, or natural, such as earthquakes, wildfires and floods. Disasters can create emergency situations and cause physical and social disorder. In these emergency situations, food, water, shelter, protection and medical help may be needed, and the effort needed to provide these basic services to the victims may need to be coordinated quickly. Disaster regions can contain many parameters, including terrain, type of location, size of location, number of people living before disaster, and the like.

In disasters, typically most of the casualties occur within 48 hours of disaster incident. Moreover, cellular network (towers) and communication and power lines that were present before disaster are often not operational. Victims, including users affected in the disaster area, conventionally cannot get in touch with their families.

Thus, victims in the disaster region typically help each other till proper communication and rescue operations are in place. Moreover, disaster relief operations can take place with help of medical departments, fire departments, and police departments, but these public safety organizations typically establish communication very late. Immediately after a disaster, victims typically try to help each other, as first hand help. Moreover, victims typically attempt to comfort themselves by searching for their friends and families in a nearby disaster region. Movement of victims may typically be restricted to less than two kilometers.

Conventionally, when people in a disaster situation look for cellular coverage or any other established services, they are not available. Moreover, victims may want to help each other and may move in groups. Nevertheless, conventionally radio systems are unable to extend D2D to V2V services in the event of total network collapse or failures.

Rather, existing D2D schemes focus mostly on user communication by means of direct D2D, and public safety when the network is not available. In a public safety case, a first public safety user equipment (PUE1) can directly communicate with another public safety user equipment (PUE2) or with the public safety control center. The goal of this approach is to have network assisted D2D communication or with proximity based user equipment (UE) to UE communication via application support. Conventionally, victim to victim communication is missing, even though victims may need to help themselves immediately after disaster.

Proper restoration of infrastructure after a disaster may take weeks to months. In the absence on network coverage, victims may try to help each other and form groups among themselves to reach safe place, but the phones that they were carrying may not useful because they could not reach out to other victims within the disaster region itself. For example, some interactive traffic comes over the top (OTT) applications provided by instant messaging programs, video or audio streaming programs, email, social media websites, applications for the same, and like applications and services. Each of these services may have their own name space, user ID, and API to developers and 3rd party application providers. But these services conventionally rely heavily on centralized authentication, authorization and connection services. When the system is not available, such conventional commercial applications may not suitable for V2V. In the absence of network coverage, it may not be possible to make use of these services. For example, lack of internet connectivity may make it impossible to access or use many of these OTT applications.

People are used to establishing communication such as by making phone calls. In the event of a disaster, one cannot expect victims to use alternate modes or applications to communicate. Moreover, there may be no disaster-specific applications on the phone.

Moreover, there may be many identities that are familiar to users of the phone. First, a phone number identity is used by a cellular phone to establish calls. Second, an IP address, either assigned by DHCP or static, can serve as an identity that is used between two or more endpoints to communicate data services. They may not, however, be a permanent identity and the user may not remember them. Third, user names, screen names, and email account names may be a permanent user-recognizable identity. The client application associated with such identities, however, may not work in D2D *ad hoc* mode. The scope of all such identities may restricted to realm, zone, or particular architecture. These identities may not be usable when the network infrastructure is no longer available.

Most of the OTT providers have their own name space, user ID, and distribute API for 3rd party application developers. When a user opens an account with any of these services, the user gets assigned a unique user ID, and the scope and the visibility of this ID is validated each time when the user logs to OTT authentication server. All these conventional approaches require the presence of a central authority to validate the credentials. In a disaster scenario, victims cannot use these services as the network is not available. For example, when a victim (UE-1) would like to communicate to another victim (UE2) using applications such as these, a social media user ID, a chat or voice over internet protocol (VoIP) user ID, or an email ID, may not be available, because the associated programs use a centralized infrastructure for authentication. Document D1 (US 2013/174271) discloses a method for a secure authentication and provisioning for over-the-top (OTT) contents distribution. Document D2 (US 2004/003190) discloses a method for user authentication using locally-stored credentials to access secure resource when a server is unavailable. Document D3 (US 2009/320102) discloses a method for establishing a secure peer-to-peer communication in a disaster or emergency condition.

### SUMMARY:

According to certain embodiments, a method can include authenticating with an authentication server of an over-the-top service. The method can also include storing an identity certificate upon receiving the identity certificate from an identity server of the over-the-top service. The identity certificate can be configured to provide credentials of the over-the-top service when a centralized authentication authority of the over-the-top service is unavailable.

In certain embodiments, a method can include generating an identity certificate for a user of an over-the-top service. The method can also include providing the identity certificate to the user upon authentication of the user. The identity certificate can be configured to provide credentials of the over-the-top service when a centralized authentication authority of the over-the-top service is unavailable.

An apparatus, according to certain embodiments, can include at least one processor and at least one memory including computer program code. The at least one memory and the computer program code can be configured to, with the at least one processor, cause the apparatus at least to authenticate with an authentication server of an over-the-top service. The at least one memory and the computer program code can also be configured to, with the at least one processor, cause the apparatus at least to store an identity certificate upon receiving the identity certificate from an identity server of the over-the-top service. The identity certificate can be configured to provide credentials of the over-the-top service when a centralized authentication authority of the over-the-top service is unavailable.

An apparatus, in certain embodiments, can include at least one processor and at least one memory including computer program code. The at least one memory and the computer program code can be configured to, with the at least one processor, cause the apparatus at least to generate an identity certificate for a user of an over-the-top service. The at least one memory and the computer program code can also be configured to, with the at least one processor, cause the apparatus at least to provide the identity certificate to the user upon authentication of the user. The identity certificate can be configured to provide credentials of the over-the-top service when a centralized authentication authority of the over-the-top service is unavailable.

According to certain embodiments, an apparatus can include means for authenticating with an authentication server of an over-the-top service. The apparatus can also include means for storing an identity certificate upon receiving the identity certificate from an identity server of the over-the-top service. The identity certificate can be configured to provide credentials of the over-the-top service when a centralized authentication authority of the over-the-top service is unavailable.

In certain embodiments, an apparatus can include means for generating an identity certificate for a user of an over-the-top service. The apparatus can also include means for providing the identity certificate to the user upon authentication of the user. The identity certificate can be configured to provide credentials of the over-the-top service when a centralized authentication authority of the over-the-top service is unavailable.

A method, in certain embodiments, can include determining that a disaster event has occurred. The method can also include broadcasting a signature and expression content based on determining that the disaster event occurred. The expression content can include an identity configured to provide credentials of an over-the-top service when a centralized authentication authority of the over-the-top service is unavailable.

According to certain embodiments, an apparatus can include at least one processor and at least one memory including computer program code. The at least one memory and the computer program code can be configured to, with the at least one processor, cause the apparatus at least to determine that a disaster event has occurred. The at least one memory and the computer program code can also be configured to, with the at least one processor, cause the apparatus at least to broadcast a signature and expression content based on determining that the disaster event occurred. The expression content can include an identity configured to provide credentials of an over-the-top service when a centralized authentication authority of the over-the-top service is unavailable.

In certain embodiments, an apparatus can include means for determining that a disaster event has occurred. The method can also include means for broadcasting a signature and expression content based on determining that the disaster event occurred. The expression content can include an identity configured to provide credentials of an over-the-top service when a centralized authentication authority of the over-the-top service is unavailable.

A non-transitory computer readable medium can, according to certain embodiments, be encoded with instructions that, when executed in hardware, perform a process. The process can include authenticating with an authentication server of an over-the-top service. The process can also include storing an identity certificate upon receiving the identity certificate from an identity server of the over-the-top service. The identity certificate can be configured to provide credentials of the over-the-top service when a centralized authentication authority of the over-the-top service is unavailable.

A non-transitory computer readable medium can, in certain embodiments, be encoded with instructions that, when executed in hardware, perform a process. The process can include generating an identity certificate for a user of an over-the-top service. The process can also include providing the identity certificate to the user upon authentication of the user. The identity certificate can be configured to provide credentials of the over-the-top service when a centralized authentication authority of the over-the-top service is unavailable.

According to certain embodiments, a non-transitory computer readable medium can be encoded with instructions that, when executed in hardware, perform a process. The process can include determining that a disaster event has occurred. The process can also include broadcasting a signature and expression content based on determining that the disaster event occurred. The expression content can include an identity configured to provide credentials of an over-the-top service when a centralized authentication authority of the over-the-top service is unavailable.

In certain embodiments, a computer program product can encode instructions for performing a process. The process can include authenticating with an authentication server of an over-the-top service. The process can also include storing an identity certificate upon receiving the identity certificate from an identity server of the over-the-top service. The identity certificate can be configured to provide credentials of the over-the-top service when a centralized authentication authority of the over-the-top service is unavailable.

A computer program product can, according to certain embodiments, encode instructions for performing a process. The process can include generating an identity certificate for a user of an over-the-top service. The process can also include providing the identity certificate to the user upon authentication of the user. The identity certificate can be configured to provide credentials of the over-the-top service when a centralized authentication authority of the over-the-top service is unavailable.

A computer program product can, in certain embodiments, encode instructions for performing a process. The process can include determining that a disaster event has occurred. The process can also include broadcasting a signature and expression content based on determining that the disaster event occurred. The expression content can include an identity configured to provide credentials of an over-the-top service when a centralized authentication authority of the over-the-top service is unavailable.

### BRIEF DESCRIPTION OF THE DRAWINGS:

For proper understanding of the invention, reference should be made to the accompanying drawings, wherein:
Figure 1 illustrates identity certificate preparation and distribution according to certain embodiments.
Figure 2 illustrates establishment of victim to victim communication using over-the-top identifiers, according to certain embodiments.
Figure 3 illustrates a method according to certain embodiments.
Figure 4 illustrates a method according to certain further embodiments.
Figure 5 illustrates a method according to certain additional embodiments.
Figure 6 illustrates a system according to certain embodiments.

### DETAILED DESCRIPTION:

According to certain embodiments, victim-to-victim (V2V) communication can be performed in a device-to-device (D2D) *ad hoc* network topology. In the absence of network coverage, users may try to help each other and form a group among themselves. The phones that they were carrying are conventionally not useful because they could not reach out to other users within the disaster region. Accordingly, certain embodiments provide a scheme wherein a securely generated user identity is provided for these applications and each user. Certain embodiments involve identity certificate preparation and distribution, and certain further embodiments involve service usage based on such an identity certificate.

In certain embodiments, more particular, there is a scheme wherein a user identity is securely generated for over-the-top (OTT) applications, and is distributed to each user of the applications. The same identities can then be used for discovering in a disaster mode scenario and normal applications can be used for communications even in such a mode. The user of the application may not see any difference in the behavior of applications, and the user may be able to interact with other victim(s) via *ad hoc* D2D communication or by other communication methods in the absence of centralized infrastructure, such as in the event of a disaster. The same distributed identities can be used by many applications to build networks in a D2D *ad hoc* mode environment. Although certain embodiments are useful for disaster and emergency situations, the same mechanism can be used other applications where no centralized cellular network is available.

Conventionally, there are not any unified identities that deal with both centralized and *ad hoc* infrastructure support. The identities are conventionally tightly coupled with namespace and architectures.

In summary, certain embodiments provide various mechanisms. For example, certain embodiments provide a mechanism to use identities in decentralized and controlled manner. Certain embodiments may enable application user IDs, such as IDs for social media, email, browsers, chat programs, and the like to be made available for *ad hoc* D2D communication by securing generating credentials with help of the authentication systems corresponding to the application(s).

Generated credentials can be stored inside the UE securely. The system can make the credentials permanent, irrespective of cache deletion, cookie flushing, or the like. At the same time, the scope and visibility can be limited to use for, for example, disaster mode operations.

Certain embodiments can provide an update mechanism to keep these decentralized identities with a restricted lifetime. Moreover, certain embodiments can enable user IDs to be available for offline service in an emergency situation.

Certain embodiments can provide a mechanism wherein a user's known identities or signature can be pushed to a routing layer. This approach, which can be referred to as an X-layer approach, can enable applications to seamlessly use the identities or signatures in D2D *ad hoc* mode.

Certain embodiments may be compatible with all types of cellular technology, such as 3G, 4G, and LTE, as well as with other wireless technologies, such as Wi-Fi. Certain embodiments may be standardized to enable D2D *ad hoc,* or infrastructureless, mode communication.

Certain embodiments may include two aspects. According to a first aspect, certain embodiments may provide for preparation and distribution of identities to enable V2V emergency communications. This procedure may be performed when users are connected to network and receiving normal services. Alternatively, this procedure may be performed during service activation itself or at regular intervals).

According to a second aspect, these identities can be used in D2D *ad hoc* network topology creation. These identities can be used to enable V2V communication, without the user needing to invoke any different application(s).

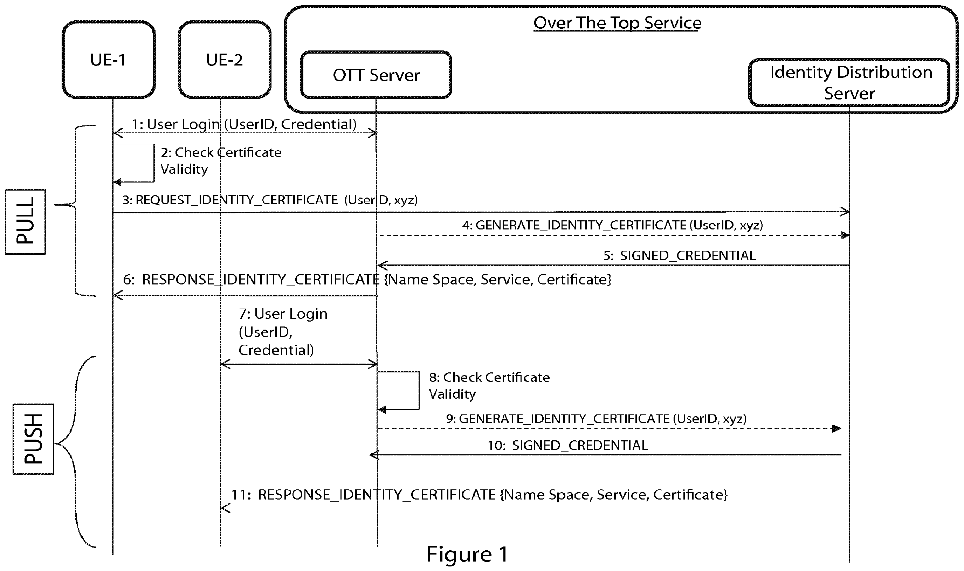

Figure 1 illustrates identity certificate preparation and distribution according to certain embodiments. Figure 1 illustrates one example of an over-the-top (OTT) service such as a social media website or application, an email service, or an instant messaging or streaming media communication service. In the illustrated approach, the OTT service is decentralized for authentication. The same approach can be applied to other OTT services.

To illustrate the steps, the service is referred to as OTT Service and OTT Server as shown in Figure 1. The figure also describes how a secure identity can be created using a name space of a user ID. This secure identity can be stored internally by client and server of the OTT system. For example, the received credential can be stored securely inside UE when the system is configured with trusted computing, such as running a trusted computing platform (TCP), for example that specified by the Trusted Computing Group (TCG)™ consortium. Later, using this transferred identity, infrastructureless communication can be established for direct D2D environment, as discussed in more detail below. For illustration purpose, we have used the applicability of TCG, and without TCG it is possible to store these identifiers securely with tight access control to these information by operating system features running on the user devices.

Figure 1 illustrates two approaches to distribute credentials, namely a push mechanism and a pull mechanism. Both approaches may serve the same purpose and may be possible options. The specified architectural elements have been identified with a name that is intended to be generic to wireless access network technologies. Thus, Figure 1 illustrates possible message exchanges for identity certificate distribution.

As shown in Figure 1, at 1, after UE-1 turns on it can perform a login operation. For example, UE-1 can either automatically or manually connect to the OTT application. The user can supply credentials such as a user ID, password, or the like. When the credentials get validated by an OTT system, the OTT system can respond to the user and the user can be connected to the OTT service.

Then, at 2, the client OTT application can check internally to see whether a client identity certificate is valid and/or present. If there is no certificate, then the client can issue a request for fresh certificate, and if the certificate was already previously issued by the OTT system, then the client OTT application can check validity and usage of the certificate.

At 3, the OTT client application can send a *REQUEST_IDENTITY_CERTIFICATE* message towards the OTT systems.

Then, at 4, the OTT system can forward to its internal identity provider system (IDP) via *generate_identity*_*certificate* message. The OTT system can supply appropriate information required for certificate generation.

Many of the OTT systems may have logical and/or physical interface separation between authentication, authorization, identity management and service, and the like. For illustration the term identity distribution server is identified as a part of the OTT system to explain the features and functions of certain embodiments, without limitation to a single server providing all such functions.

At 5, the OTT IDP can generate a client certificate. The OTT IDP can also pass the client certificate to the OTT server that is interacting with the OTT client applications.

Then, at 6, the OTT client application can receive the client credentials. The OTT client application can store the client credentials internally in a secured place. This credential can be configured to be used only when there is no network coverage, such as in disaster mode operations. This credential scope, visibility and applicability can be for a controlled environment. Moreover, the lifetime of the credentials may be short. Thus, the user of this system may use the device with this credential for a shorter period of time. For example, the validity of certificate may be for a 30 day period or less. The user equipment (UE) can be expected to renew the certificate at regular intervals, such as every 15 days. Such shorter validity can avoid overuse and can eliminate the need of certificate revocation list maintenance. As the certificate generation could also be based on well known credentials, and may use Identity based encryption (IBE) type methods to avoid certificate revocation process. This step may mainly be used, for example, to assure that the identity was issued by an operator.

Steps 1-6 were related to an embodiment in which the user equipment does a pull of the identity certificate. By contrast, steps 7-11 are related to an embodiment in which an identity certificate is generated by the OTT service and the network does an automatic push of the information.

At 7, this message is similar to message 1, after UE-2 turns on, it can perform login operations and either automatically or manually connects to OTT applications. The user can supply credentials such as user ID, password, or the like. When credentials get validated by OTT system, the OTT system can provide a response to user, and the user can be connected to the OTT service.

At 8, after completing the validation of the user of UE-2, or during the authorization process itself, the OTT server can internally check validity of certificate. If there is no certificate, then the client can issue a request for a fresh certificate. If there is a certificate already, previously issued by the OTT system, then UE-2 can check validity and usage of the certificate. In this architecture, the server can maintain the certificate database that it has issued as part of user credentials.

Messages 9 and 10 can be similar to messages 4 and 5, respectively. Message 11 can be similar to message 6. Here, the message may be pushed asynchronously, as the UE need not wait for this operation.

Users of UE-1 or UE-2, after receiving the identity certificate, can store securely in a subscriber identity module (SIM) or at protected storage. Those can be device specific, and these identifiers are not visible to users.

As said earlier, the lifetime of the certificate can be made short. To avoid generating the keys each time, the network can send an updated certificate by updated date change.

It is possible to control the visibility and usage of certificate to be that the certificate is only visible and used when operating in *ad hoc* D2D mode or disaster mode.

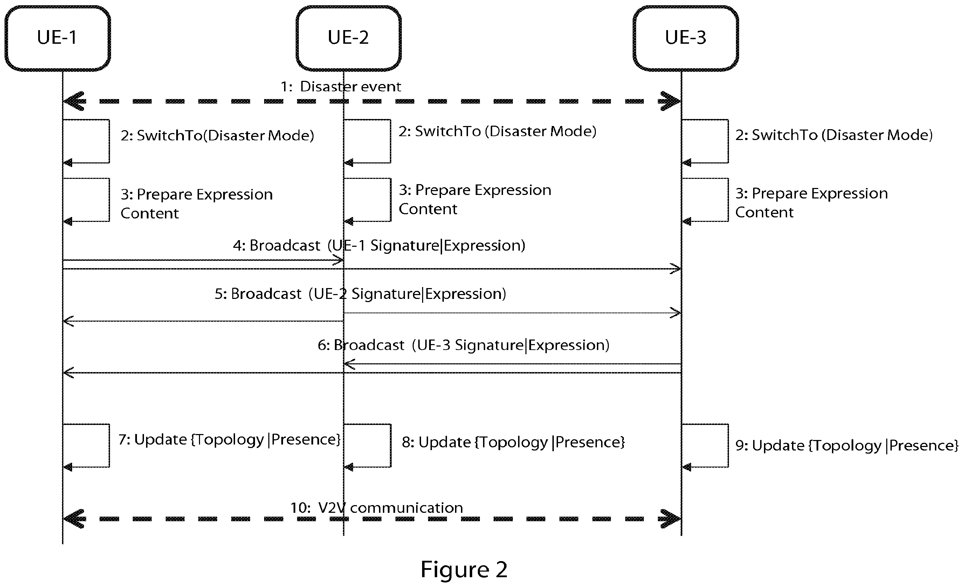

Figure 2 illustrates establishment of victim to victim communication using over-the-top identifiers, according to certain embodiments. A group of users, which may be referred to as victims, can be, for example, trapped inside the disaster area, namely UE1, UE2, and UE3. Each UE on its own can execute an extended network coverage detection approach to ensure that they qualify, such as that they are being trapped inside a disaster. If so, they can perform a disaster mode switch. Next, they discover themselves via identifiers that were provided to them, and establish V2V communication. Figure 2 illustrates the sequence of messages.

At 1, a disaster can occur in a region. UE-1, UE-2, and UE-3 can be trapped inside the region. Each of the UEs that is trapped can execute a series of steps to determine that there was network coverage earlier, which is not now present. Each UE can execute a location-specific network coverage approach. For example, the UE can determine that the absence of network coverage is not due to poor signal strength or UE(s) inside a tunnel/elevator *etc.* The UE can use various supplemental data set to determine the exact cause of such an outage. After each UE has determined that it is due to a disaster, at 2 the UE can change the mode of operation of the UE to a disaster mode.

At 3, now each UE can begin to try to establish secured communication to each other in that area. The identifiers and credentials that were distributed can be used to generate an application-specific signature. The identifiers and credentials can contain unique identifiers by which each other endpoints can recognize one another.

For instance, users of UE1 and UE2 can be known to each other, for example they may be friends, via a chat or other communication session. Then, both of them can have their offline contact database stored inside their respective UEs. UE-3, however, may not be known to users of UE-1 and UE-3. When UE-1 generates an application signature containing its identifiers and pre-signed by an OTT service. This can be a user of UE-1 certificate. Both UE-2 and UE-3 can easily recognize the message in such a situation. Each UE can generate a signature, expression internally. This can be referred to as UE-1 expression information.

At 4, each generated UE-1 expression can be sent as a broadcast or given via any *ad hoc* network protocol if unlicensed spectrum needs to be used. Similarly, at 5, each generated UE-2 expression can be sent as a broadcast or given via any *ad hoc* network protocol if unlicensed spectrum needs to be used. Yet again, at 6, each generated UE-3 expression can be sent as a broadcast or given via any *ad hoc* network protocol if unlicensed spectrum needs to be used.

At 7, when UE-1 receives UE-2 expression information, UE-1 can update presence information internally. Since UE-1 and UE-2 had shared their contacts earlier, populating presence information can be performed automatically. By contrast, when UE-1 receives UE-3 expression information, since UE-1 and UE-3 had not known each other, the presence information can be reported differently to users of UE1. For example, the presence can be indicated via a different color coding icon or with the information that UE-3 would use to advertise text on unknown contact list of other's UE or by other means that is popular to get identified in disaster scenarios. Each of UE1 and UE3 can exchange contact information and can form a disaster group presence service.

At 8 and 9, UE-2 and UE-3 respectively can update their presence information similarly to the way the UE-1 updated its presence information at 7.

At 10, UE-1, UE-2 and UE-3 can be connected in a victim-to-victim (V2V) environment and application communication can take place normally. The basic mode of communication establishment using application identifiers will enable seamless integration of application to disaster environment.

The above-described mechanism can be used for both licensed and unlicensed spectrum. Depending upon the node density, interference, and underlying routing protocols and topology, node-specific information can be kept as part of the node information. There may be around 40+ routing protocols in use. Along with routing updates, each UE can send its own identifiers and can populate a routing table in each node. With each of these identities, it may be possible to propagate UEs identities as part of a route discovery process in an *ad hoc* network scenario.

Each node may contain route information, such as an IPv4/IPv6 address and its neighbor reachable information, along with their the neighbors' public identities. Pushing user identifiers to lower layer can permit an endpoint to run a phone call routing service over an *ad hoc* network. UE-1 can continue to converse with UE-2 just like it was conversing over the regular network.

When a UE is in *ad hoc* mode, or in a D2D infrastructureless mode, a default application may run in power saving mode. Any periodic update such as presence or the like may fail to be performed. Instead, localized presence information can be created based on the user and the user's devices.

Based on the type of *ad hoc* routing protocols, presence information can be easily derived from each node's routing table (containing identities), and the updated in the contact list of phones.

Certain embodiments may provide various benefits or advantages. For example, certain embodiments may provide a mechanism to use identities in a decentralized and controlled manner. Certain embodiments may permit a user ID for a social media website or application, an email application or service, or a browser application. Certain embodiments may be made available for *ad hoc* D2D communication by securing generating credentials with help of the authentication system of the OTT service's system.

Generated credentials can be stored inside the UE securely. The credentials can be made permanent irrespective of cache deletion and/or cookie flushing. At the same time, the use of such credentials can be restricted with respect to scope and visibility to be used for disaster mode operations only.

An update mechanism can be used to keep these decentralized identities with a restricted lifetime. Certain embodiments can enable user IDs to be available for offline service in emergency situation. Moreover, certain embodiments provide a mechanism wherein user known identifies can be pushed to routing layer, which can be an X-layer approach, can which can enable applications to seamlessly use the credentials in D2D *ad hoc* mode.

A proposed scheme can be compatible to all types of cellular technology 3G, 4G, LTE, and the like. The proposed mechanism can be standardized to enable D2D *ad hoc,* for example infrastructureless, mode communication.

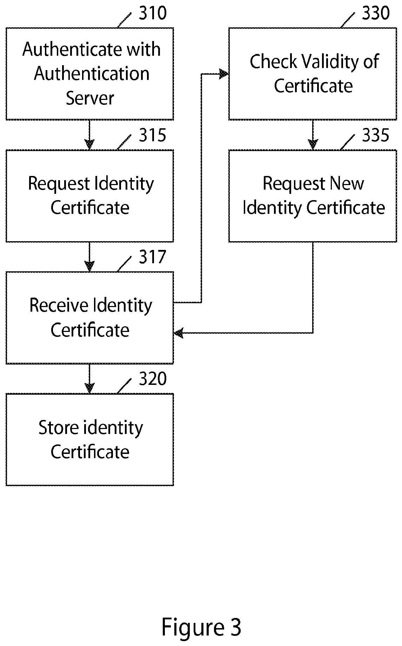

Figure 3 illustrates a method according to certain embodiments. As shown in Figure 3, a method can include, at 310, authenticating with an authentication server of an over-the-top service. The method can also include, at 320, storing an identity certificate upon receiving, at 317, the identity certificate from an identity server of the over-the-top service. The identity certificate can be configured to provide credentials of the over-the-top service when a centralized authentication authority of the over-the-top service is unavailable. The identity certificate can either be pushed to a user equipment or pulled by the user equipment.

For example, in certain embodiments, at 315, the method can include requesting an identity certificate from the identity server of the over-the-top service upon authenticating for the over-the-top service.

The method can also include, at 330, checking a validity of a certificate received from an over-the-top server. The method can further include, at 335, requesting a new certificate when the certificate received the over-the-top server fails to meet a predetermined condition.

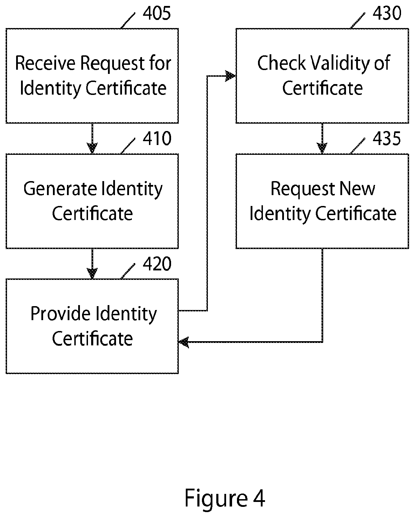

Figure 4 illustrates a method according to certain further embodiments. As shown in Figure 4, at 410, a method can include generating an identity certificate for a user of an over-the-top service. The method can also include, at 420, providing the identity certificate to the user upon authentication of the user. The identity certificate can be configured to provide credentials of the over-the-top service when a centralized authentication authority of the over-the-top service is unavailable.

The generating the identity certificate can be responsive to a request received at 405 from a user equipment of the user. Thus, for example, the identity certificate can be pulled by the user equipment. Alternatively, the identity certificate can be pushed to the user equipment.

The method can also include, at 430, checking a validity of the identity certificate provided to the user. The method can further include, at 435, requesting a new certificate when the certificate provided to the user fails to meet a predetermined condition.

The identity certificate can be set to expire a predetermined time from issuance. For example, the predetermined time can be 30 days. Thus, for example, the predetermined condition can be that certificate has 15 days or less until it expires.

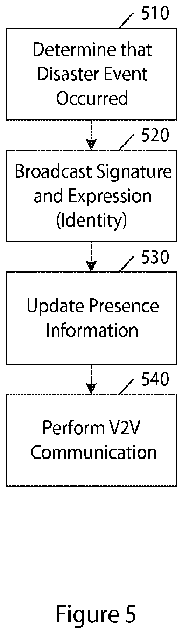

Figure 5 illustrates a method according to certain additional embodiments. As shown in Figure 5, a method may include, at 510, determining that a disaster event has occurred. The method may also include, at 520, broadcasting a signature and expression content based on determining that the disaster event occurred. The expression content can include an identity configured to provide credentials of an over-the-top service when a centralized authentication authority of the over-the-top service is unavailable.

The method can further include, at 530, updating presence information based on at least one broadcast signature and expression content received at a first user equipment from a second user equipment. The method can additionally include, at 540, performing victim to victim communication using the over-the-top service based on the presence information.

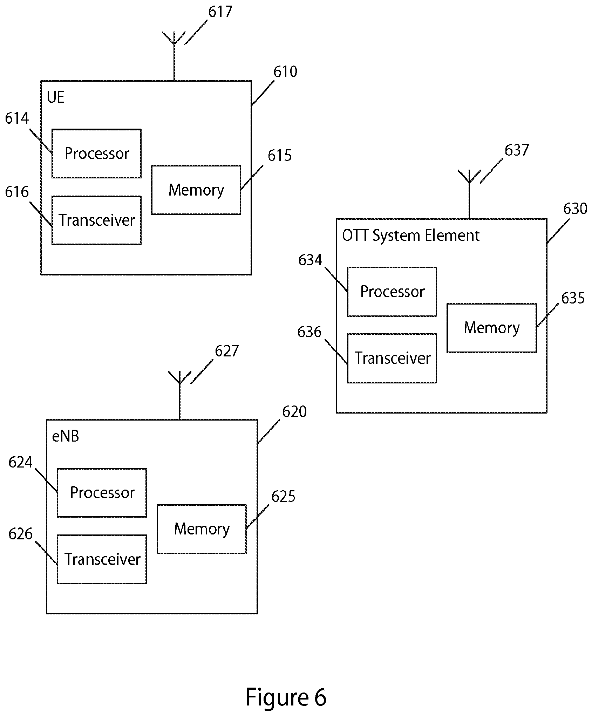

Figure 6 illustrates a system according to certain embodiments of the invention. In one embodiment, a system may include multiple devices, such as, for example, at least one UE 610, at least one eNB 620 or other base station or access point, and at least one OTT system element 630. In certain systems, only UE 610 and OTT system element 630 may be present, and in other systems UE 610, OTT system element 630, and a plurality of other user equipment may be present. Other configurations are also possible.

Each of these devices may include at least one processor, respectively indicated as 614, 624, and 634. At least one memory can be provided in each device, and indicated as 615, 625, and 635, respectively. The memory may include computer program instructions or computer code contained therein. The processors 614, 624, and 634 and memories 615, 625, and 635, or a subset thereof, can be configured to provide means corresponding to the various blocks of Figures 3-5.

As shown in Figure 6, transceivers 616, 626, and 636 can be provided, and each device may also include an antenna, respectively illustrated as 617, 627, and 637. Other configurations of these devices, for example, may be provided. For example, OTT system element 630 may be configured for wired communication, rather than wireless communication, and in such a case antenna 637 would illustrate any form of communication hardware, without requiring a conventional antenna. The OTT system element 630 may be, for example, an OTT authentication server or an identity distribution server.

Transceivers 616, 626, and 636 can each, independently, be a transmitter, a receiver, or both a transmitter and a receiver, or a unit or device that is configured both for transmission and reception.

Processors 614, 624, and 634 can be embodied by any computational or data processing device, such as a central processing unit (CPU), application specific integrated circuit (ASIC), or comparable device. The processors can be implemented as a single controller, or a plurality of controllers or processors.

Memories 615, 625, and 635 can independently be any suitable storage device, such as a non-transitory computer-readable medium. A hard disk drive (HDD), random access memory (RAM), flash memory, or other suitable memory can be used. The memories can be combined on a single integrated circuit as the processor, or may be separate from the one or more processors. Furthermore, the computer program instructions stored in the memory and which may be processed by the processors can be any suitable form of computer program code, for example, a compiled or interpreted computer program written in any suitable programming language.

The memory and the computer program instructions can be configured, with the processor for the particular device, to cause a hardware apparatus such as UE 610, eNB 620, and OTT system element 630, to perform any of the processes described above (see, for example, Figures 1-5). Therefore, in certain embodiments, a non-transitory computer-readable medium can be encoded with computer instructions that, when executed in hardware, perform a process such as one of the processes described herein. Alternatively, certain embodiments of the invention can be performed entirely in hardware.

Furthermore, although Figure 6 illustrates a system including a UE, eNB, and OTT system element, embodiments of the invention may be applicable to other configurations, and configurations involving additional elements. For example, not shown, the UE 610 may be in communication with a wireless local area network.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. For example, while certain embodiments have been described in terms a of disaster scenario, embodiments may be applicable to other scenarios, such as when a group of users goes beyond the coverage range of an existing communication network. In order to determine the metes and bounds of the invention, therefore, reference should be made to the appended claims.

### Partial Glossary

- SIM: Subscriber Identity Module
- OTT: Over The Top
- UE: User Equipment
- D2D: Device To Device Communication
- V2V: Victim to Victim communication
- TCG: Trusted Computing Group
- TCP: Trusted Computing Platform

## Claims

1. A method, comprising:
- authenticating with an authentication server of an over-the-top service,
- receiving an identity certificate from an identity server of the over-the-top service, the identity certificate being configured to provide credentials of the over-the-top service when a centralized authentication authority of the over-the-top-service is unavailable,
- storing the identity certificate,
- determining that a disaster event has occurred,
and
- broadcasting a signature and expression content based on determining that the disaster event occurred, the expression content comprising an identity configured to provide credentials of an over-the-top service when a centralized authentication authority of the over-the-top service is unavailable.

2. The method according to claim 1, wherein the identity certificate is pushed to a user equipment, pulled by a user equipment or requested by the user equipment upon authenticating for the over-the-top service.

3. The method according to claim 1 or 2, further comprising:
- checking a validity of the identity certificate, and
- requesting a new identity certificate when the identity certificate fails to meet a predetermined condition.

4. The method according to any one of claims 1-3, further comprising:
- updating presence information based on at least one broadcast signature and expression content received at a first user equipment from a second user equipment, and
- performing victim to victim communication using the over-the-top service based on the presence information.

5. An apparatus, comprising:
- means for authenticating with an authentication server of an over-the-top service, and
- means for receiving an identity certificate from an identity server of the over-the-top service, the identity certificate being configured to provide credentials of the over-the-top service when a centralized authentication authority if the over-the-top service is unavailable,
- means for storing the identity certificate,
- means for determining that a disaster event has occurred, and
- means for broadcasting a signature and expression content based on determining that the disaster event occurred, the expression content comprising an identity configured to provide credentials of an over-the-top service when a centralized authentication authority of the over-the-top service is unavailable.

6. The apparatus according to claim 5, further comprising:
- means for receiving the identity certificate pushed to the apparatus,
- means for requesting the identity certificate from the identity server, and/or
- means for pulling the identity certificate from the identity server.

7. The apparatus according to claim 5 or 6, further comprising:
- means for checking a validity of the identity certificate, and
- means for requesting a new identity certificate when the identity certificate fails to meet a predetermined condition.

8. The apparatus according to any one of claims 5-7, further comprising:
- means for updating presence information based on at least one broadcast signature and expression content received at a first user equipment from a second user equipment, and
- means for performing victim to victim communication using the over-the-top service based on the presence information.

9. A computer program product encoding instructions for performing a process, the process comprising the method of any of claims 1-4.

## Patentansprüche

1. Verfahren, umfassend:
- Authentifizieren mit einem Authentifizierungsserver eines Over-the-Top-Diensts,
- Empfangen eines Identitätszertifikats von einem Identitätsserver des Over-the-Top-Diensts, wobei das Identitätszertifikat dazu ausgelegt ist, Anmeldeinformationen des Over-the-Top-Diensts bereitzustellen, wenn eine zentralisierte Authentifizierungsstelle des Over-the-Top-Diensts nicht verfügbar ist,
- Speichern des Identitätszertifikats,
- Bestimmen, dass ein Notfallereignis eingetreten ist, und
- Senden einer Signatur und eines Ausdruckinhalts basierend auf einem Bestimmen, dass das Notfallereignis eingetreten ist, wobei der Ausdruckinhalt eine Identität umfasst, die dazu ausgelegt ist, Anmeldeinformationen eines Over-the-Top-Diensts bereitzustellen, wenn eine zentralisierte Authentifizierungsstelle des Over-the-Top-Diensts nicht verfügbar ist.

2. Verfahren nach Anspruch 1, wobei das Identitätszertifikat per Push zu einer Benutzerausrüstung gesendet, per Pull von einer Benutzerausrüstung abgerufen oder durch die Benutzerausrüstung nach Authentifizierung für den Over-the-Top-Dienst angefordert wird.

3. Verfahren nach Anspruch 1 oder 2, ferner umfassend:
- Überprüfen einer Gültigkeit des Identitätszertifikats, und
- Anfordern eines neuen Identitätszertifikats, wenn das Identitätszertifikat eine vorher festgelegte Bedingung nicht erfüllt.

4. Verfahren nach einem der Ansprüche 1-3, ferner umfassend:
- Aktualisieren von Präsenzinformationen basierend auf zumindest einer Sendesignatur und einem Ausdruckinhalt, die an einer ersten Benutzerausrüstung von einer zweiten Benutzerausrüstung empfangen wurden, und
- Durchführen einer Opfer-zu-Opfer-Kommunikation unter Verwendung des Over-the-Top-Diensts basierend auf den Präsenzinformationen.

5. Einrichtung, umfassend:
- ein Mittel zum Authentifizieren mit einem Authentifizierungsserver eines Over-the-Top-Diensts, und
- ein Mittel zum Empfangen eines Identitätszertifikats von einem Identitätsserver des Over-the-Top-Diensts, wobei das Identitätszertifikat dazu ausgelegt ist, Anmeldeinformationen des Over-the-Top-Diensts bereitzustellen, wenn eine zentralisierte Authentifizierungsstelle des Over-the-Top-Diensts nicht verfügbar ist,
- ein Mittel zum Speichern des Identitätszertifikats,
- ein Mittel zum Bestimmen, dass ein Notfallereignis eingetreten ist, und
- ein Mittel zum Senden einer Signatur und eines Ausdruckinhalts basierend auf einem Bestimmen, dass das Notfallereignis eingetreten ist, wobei der Ausdruckinhalt eine Identität umfasst, die dazu ausgelegt ist, Anmeldeinformationen eines Over-the-Top-Diensts bereitzustellen, wenn eine zentralisierte Authentifizierungsstelle des Over-the-Top-Diensts nicht verfügbar ist.

6. Einrichtung nach Anspruch 5, ferner umfassend:
- ein Mittel zum Empfangen des per Push zu der Einrichtung gesendeten Identitätszertifikats,
- ein Mittel zum Anfordern des Identitätszertifikats von dem Identitätsserver, und/oder
- ein Mittel zum Abrufen per Pull des Identitätszertifikats von dem Identitätsserver.

7. Einrichtung nach Anspruch 5 oder 6, ferner umfassend:
- ein Mittel zum Überprüfen einer Gültigkeit des Identitätszertifikats, und
- ein Mittel zum Anfordern eines neuen Identitätszertifikats, wenn das Identitätszertifikat eine vorher festgelegte Bedingung nicht erfüllt.

8. Einrichtung nach einem der Ansprüche 5-7, ferner umfassend:
- ein Mittel zum Aktualisieren von Präsenzinformationen basierend auf zumindest einer Sendesignatur und einem Ausdruckinhalt, die an einer ersten Benutzerausrüstung von einer zweiten Benutzerausrüstung empfangen wurden, und
- ein Mittel zum Durchführen einer Opfer-zu-Opfer-Kommunikation unter Verwendung des Over-the-Top-Diensts basierend auf den Präsenzinformationen.

9. Computerprogrammprodukt, das Anweisungen zum Durchführen eines Prozesses codiert, wobei der Prozess das Verfahren nach einem der Ansprüche 1-4 umfasst.

## Revendications

1. Procédé, comprenant :
- l'authentification, à l'aide d'un serveur d'authentification, d'un service par contournement ;
- la réception d'un certificat d'identité en provenance d'un serveur d'identité du service par contournement, le certificat d'identité étant configuré de manière à ce qu'il fournisse des justificatifs d'identité du service par contournement lorsqu'une autorité d'authentification centralisée du service par contournement est non disponible ;
- le stockage du certificat d'identité ;
- la détermination du fait qu'un événement catastrophique s'est produit ; et
- la diffusion d'une signature et d'un contenu d'expression sur la base de la détermination du fait que l'événement catastrophique s'est produit, le contenu d'expression comprenant une identité qui est configurée de manière à ce qu'elle fournisse des justificatifs d'identité d'un service par contournement lorsqu'une autorité d'authentification centralisée est non disponible.

2. Procédé selon la revendication 1, dans lequel le certificat d'identité est poussé jusqu'à un équipement d'utilisateur, est tiré par un équipement d'utilisateur ou est demandé en requête par l'équipement d'utilisateur suite à une authentification du service par contournement.

3. Procédé selon la revendication 1 ou 2, comprenant en outre :
- le contrôle d'une validité du certificat d'identité ; et
- la demande en requête d'un nouveau certificat d'identité lorsque le certificat d'identité échoue à satisfaire une condition prédéterminée.

4. Procédé selon l'une quelconque des revendications 1 à 3, comprenant en outre :
- la mise à jour d'une information de présence sur la base d'au moins une signature et un contenu d'expression diffusés qui sont reçus au niveau d'un premier équipement d'utilisateur depuis un second équipement d'utilisateur ; et
- la réalisation d'une communication victime à victime en utilisant le service par contournement sur la base de l'information de présence.

5. Appareil, comprenant :
- un moyen pour authentifier, à l'aide d'un serveur d'authentification, un service par contournement ; et
- un moyen pour recevoir un certificat d'identité en provenance d'un serveur d'identité du service par contournement, le certificat d'identité étant configuré de manière à ce qu'il fournisse des justificatifs d'identité du service par contournement lorsqu'une autorité d'authentification centralisée du service par contournement est non disponible ;
- un moyen pour stocker le certificat d'identité ;
- un moyen pour déterminer qu'un événement catastrophique est survenu ; et
- un moyen pour diffuser une signature et un contenu d'expression sur la base de la détermination du fait que l'événement catastrophique s'est produit, le contenu d'expression comprenant une identité qui est configurée de manière à ce qu'elle fournisse des justificatifs d'identité d'un service par contournement lorsqu'une autorité d'authentification centralisée est non disponible.

6. Appareil selon la revendication 5, comprenant en outre :
- un moyen pour recevoir le certificat d'identité qui est poussé jusqu'à l'appareil ;
- un moyen pour demander en requête le certificat d'identité auprès du serveur d'identité ; et/ou
- un moyen pour tirer le certificat d'identité depuis le serveur d'identité.

7. Appareil selon la revendication 5 ou 6, comprenant en outre :
- un moyen pour contrôler une validité du certificat d'identité ; et
- un moyen pour demander en requête un nouveau certificat d'identité lorsque le certificat d'identité échoue à satisfaire une condition prédéterminée.

8. Appareil selon l'une quelconque des revendications 5 à 7, comprenant en outre :
- un moyen pour mettre à jour une information de présence sur la base d'au moins une signature et un contenu d'expression diffusés qui sont reçus au niveau d'un premier équipement d'utilisateur depuis un second équipement d'utilisateur ; et
- un moyen pour réaliser une communication victime à victime en utilisant le service par contournement sur la base de l'information de présence.

9. Progiciel codant des instructions pour réaliser un processus, le processus comprenant le procédé selon l'une quelconque des revendications 1 à 4.
